# FASCICULE DE BREVET EUROPEEN

(11) **EP 3 577 355 B1**
(45) Date de publication et mention de la délivrance du brevet: **13.10.2021**
(21) Numéro de dépôt: 18705443.2
(22) Date de dépôt: 31.01.2018
(51) Int. Cl.: F16C 11/04, F16C 7/02, F16C 27/02, B33Y 10/00, B33Y 80/00, B22F 3/105, B22F 3/11, B22F 5/00, B22F 5/10

(54) **BIELLE DE TURBOMACHINE A FILTRE INTEGRE ET SON PROCEDE DE REALISATION**
PLEUELSTANGE FÜR EINE TURBOMASCHINE MIT INTEGRIERTEN DÄMPFER UND HERSTELLUNGSVERFAHREN DAFÜR
LINKAGE FOR A TURBOMACHINE WITH INTEGRATED DAMPER AND MANUFACTURING PROCESS THEREFORE

(30) Priorité: 02.02.2017 FR 1750861
(43) Date de publication de la demande: 11.12.2019
(73) Titulaire: Safran Transmission Systems, 92700 Colombes (FR)
(72) Inventeur: MABIRE, Simon, Pierre, Mathieu, 77550 Moissy-Crayamel (FR); DREVON, Fanélie, Violaine, 77550 Moissy-Crayamel (FR)
(74) Mandataire: Gevers & Orès
(86) Numéro de dépôt international: PCT/FR2018/050229
(87) Numéro de publication internationale: WO 2018/142071

(56) Documents cités:
- FR-A1- 2 794 503
- FR-A1- 2 866 683
- US-A1- 2014 264 187
- US-A1- 2016 167 132
- US-A1- 2016 245 710

## Description

### DOMAINE TECHNIQUE

La présente invention concerne une bielle, en particulier de turbomachine, ainsi qu'un procédé de réalisation d'une telle bielle.

### ETAT DE L'ART

L'état de la technique comprend les demandes de brevet publiées sous les numéros US-A1-2016/167132 et US-A1-2016/245710. Le brevet FR 2 794 503 A1 divulgue une bielle suivant le préambule de la première revendication. Une turbomachine, telle qu'un turboréacteur, utilisée pour la propulsion des aéronefs comprend des machines auxiliaires nécessaires à son fonctionnement. Il s'agit par exemple de pompes de fluides pour actionner des organes de commande, de lubrification ou de carburant ainsi que de générateurs électriques. Ces machines sont montées en prise mécanique avec un boîtier d'engrenages qui est lui-même relié à un arbre du moteur par une liaison mécanique appropriée. Ce boîtier est communément désigné par son sigle, AGB (acronyme de l'anglais «*Accessory Gear Box*»), dans le domaine. Le boîtier d'engrenages est maintenu en suspension sur le carter du moteur par des dispositifs de suspension comportant des bielles.

Une bielle comprend un corps intermédiaire de forme générale allongée et reliée à ses extrémités longitudinales à des têtes de liaison comportant des orifices dont les axes sont dans des plans sensiblement parallèles.

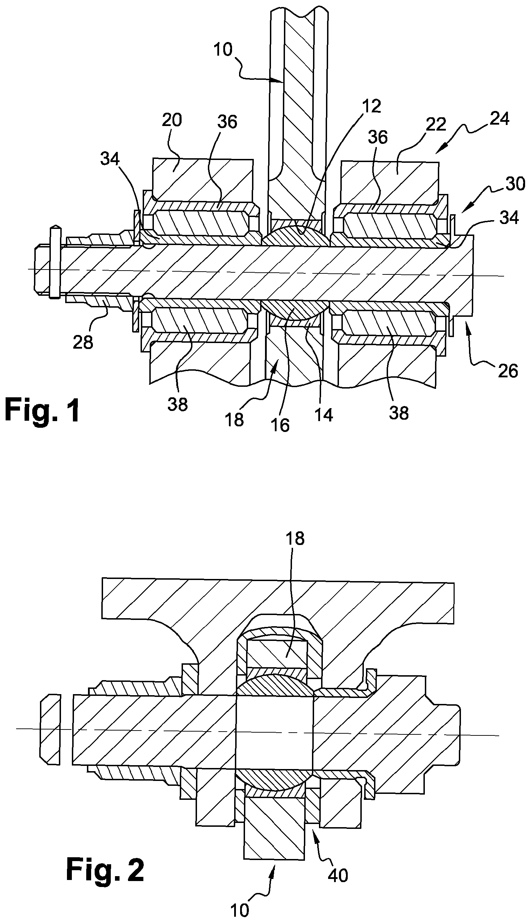

La figure 1 montre une bielle 10 de ce type, le plan de coupe passant par l'axe de l'un des orifices 12 précités. Cet orifice 12 reçoit une cage 14 cylindrique extérieurement, qui est maintenue par sertissage dans l'orifice 12. La surface interne de la cage 14 sert de guide à une douille à surface extérieure sphérique formant une rotule 16.

Chaque tête 18 de la bielle est montée entre les oreilles 20, 22 d'une chape femelle 24, une partie seulement de la bielle 10 étant visible sur la figure 1. La tête 18 visible est maintenue entre les deux oreilles 20, 22 par une vis 26 qui traverse ces dernières et la rotule 16. La vis 26 est elle-même immobilisée par un écrou 28.

La bielle 10 est immobilisée axialement selon la direction de la vis 26 par la rotule 16 qui, comme on le voit sur la figure, est en appui de chaque côté contre un palier 30 inséré dans l'orifice de chaque oreille 20,22. Grâce à ce montage avec rotule, la tête 18 peut pivoter librement autour de l'axe de la vis et autour de tout axe perpendiculaire à celui-ci dans les limites des butées définies par l'environnement. Le mouvement est limité notamment en fonction de l'intervalle, ménagé de part et d'autre, entre la tête de bielle 18 et les oreilles 20, 22 de la chape 24.

Au cours de sa vie, cette liaison est soumise à des micro-déplacements dus notamment à des efforts de vibration, en particulier à des sollicitations orientées parallèlement à l'axe de la bielle 10, en raison notamment de la faible inclinaison des bielles 10 par rapport au plan horizontal. Ces sollicitations finissent à la longue par user et dégrader le dispositif de suspension.

Une solution à ce problème consiste à équiper ce type de dispositif de moyens d'amortissement des vibrations. La solution illustrée par la figure 1 consiste à monter la vis 26 dans les orifices des oreilles 20, 22 de la chape par l'intermédiaire de paliers amortisseurs 30. L'orifice de chaque oreille reçoit un palier amortisseur 30 comportant des bagues annulaires interne 34 et externe 36 entre lesquelles s'étend un amortisseur annulaire 38 en élastomère.

Cependant, cette technologie présente des inconvénients liés, en particulier, à la tenue en température et à des produits liquides (polluants, solvants, kérosène, etc.) de l'amortisseur (dégradation de l'élastomère et variabilité de comportement dynamique). En effet, du fait de sa réalisation en élastomère, l'utilisation de l'amortisseur est limitée à des applications où la température ambiante est généralement inférieure à 200°C. De plus, les mécanismes de défaillance des élastomères sont mal formalisés, ce qui implique une fréquence élevée de rechange du palier pour remplacement dès l'apparition de la première fissure alors qu'il devrait pouvoir encore assurer sa fonction pour de nombreux cycles.

La figure 2 illustre une autre solution au problème précité, qui est décrite dans le brevet FR-B1-2 866 683. La solution consiste à rapporter un amortisseur en élastomère 40 sur la tête 18 de la bielle 10.

Cependant, cet amortisseur présente les mêmes inconvénients que la solution précédente.

En outre, l'utilisation d'un amortisseur en élastomère, et plus précisément d'un amortisseur réalisé en matériau isolant, rompt la continuité électrique entre l'équipement suspendu, par exemple la bielle et la tête de la bielle comportant l'amortisseur en élastomère, et l'ensemble de support, par exemple le carter du moteur et le boîtier d'engrenages.

Afin d'assurer la continuité électrique entre l'équipement suspendu et l'ensemble de support lorsque l'amortisseur est en élastomère, une tresse métallique est généralement ajoutée pour relier l'équipement suspendu et l'ensemble de support.

Cependant, la tresse métallique, par exemple en inox, est fragile et coûteuse.

De plus, la fixation d'une tresse métallique augmente la masse de l'équipement suspendu, et complexifie ce dernier. En effet, la fixation d'une tresse métallique l'équipement suspendu et à l'ensemble de support nécessite des vis ou des goujons ou des inserts, des rondelles, des écrous et des épargnes (i.e. des masques) dans la protection anticorrosion de l'équipement suspendu pour permettre la continuité électrique.

### EXPOSE DE L'INVENTION

La présente invention propose un perfectionnement à la technologie décrite ci-dessus, qui représente une solution simple, efficace et économique, en particulier pour répondre au problème de tenue thermique précitée des moyens d'amortissement.

L'invention propose une bielle, en particulier pour une turbomachine, comprenant un corps intermédiaire de forme générale allongée et reliée à ses extrémités longitudinales à des têtes de liaison comportant des orifices dont les axes sont par exemple sensiblement parallèles, caractérisée en ce que lesdites têtes sont assemblées ou formées d'une seule pièce avec au moins une partie dudit corps et au moins l'une d'entre elles comporte, autour de l'axe de son orifice, une partie annulaire alvéolaire formant un filtre vibratoire et ayant une capacité de déformation en compression et/ou en flexion supérieure à celle du reste de la bielle et en particulier à celle dudit corps.

Le filtre ou une partie de la bielle peut ainsi être réalisé dans un matériau résistant à des températures élevées, par exemple supérieure à 200°C. Ceci est rendu possible par la structure alvéolaire ayant des propriétés de souplesse et en particulier des capacités de déformation en compression et/ou en flexion suffisantes pour filtrer un spectre vibratoire auxquelles le système suspendu est susceptible d"être exposé en fonctionnement.

La bielle selon l'invention est au moins en partie métallique.

Selon un mode de réalisation, lorsque les têtes de liaison sont formées d'une seule pièce avec au moins une partie du corps de la bielle, la bielle est métallique.

Selon un mode de réalisation, lorsque les têtes de liaison sont assemblées avec au moins une partie du corps de la bielle, la bielle est au moins en partie métallique. Dans ce cas, la bielle peut être en partie métallique et en partie en matériau composite. En particulier, au moins une partie des têtes de liaison et au moins une partie du corps de la bielle sont métalliques. Préférentiellement, le corps de la bielle et la partie annulaire alvéolaire de au moins l'une des têtes de liaison de la bielle sont au moins en partie métalliques.

De façon avantageuse, une telle bielle permet de combiner une fonction de liaison amortie, notamment grâce à la partie annulaire alvéolaire, et une fonction de continuité électrique, notamment grâce à la composition au moins en partie métallique de la bielle.

Les têtes assemblées avec au moins une partie du corps de la bielle, au moins l'une d'entre elles comportant une partie annulaire alvéolaire, au moins une partie des têtes de liaison et au moins une partie du corps étant métalliques, permet d'assurer une continuité électrique au niveau de la partie annulaire alvéolaire entre la bielle, l'AGB et le carter du moteur.

Ainsi, la bielle selon l'invention permet avantageusement de regrouper deux fonctions spécifiques, une fonction de liaison amortie et une fonction de continuité électrique, dans un même élément, ici la bielle.

En outre, la bielle selon l'invention permet d'éviter l'utilisation d'une tresse métallique, qui est fragile, coûteuse et qui augmente la masse de l'équipement suspendu. De ce fait, la masse de la bielle selon l'invention est réduite par rapport à la masse des bielles selon l'art antérieur, grâce à la suppression de la tresse métallique et des éléments de fixation de cette dernière.

Ceci permet aussi de simplifier l'équipement suspendu à relier, par exemple un AGB. En effet, avec une bielle selon l'invention, il n'y a plus besoin d'utiliser des points de fixation ou des épargnes dans la protection anticorrosion de l'équipement suspendu pour permettre la continuité électrique.

De façon avantageuse, la bielle selon l'invention a une conductivité électrique élevée par rapport à celle d'une bielle selon l'art antérieur. De préférence, la conductance électrique de la bielle est supérieure ou égale à 200 Siemens (S). Plus préférentiellement, la conductance électrique de la bielle est supérieure ou égale à 400 S.

De préférence, la bielle selon l'invention a une résistance électrique faible par rapport à celle d'une bielle selon l'art antérieur. De préférence, la résistance électrique de la bielle est inférieure ou égale à 5 mΩ. Plus préférentiellement, la résistance électrique de la bielle est inférieure ou égale à 2,5 mΩ.

La bielle selon l'invention peut comprendre une ou plusieurs des caractéristiques ci-dessous, prises isolément les unes des autres ou en combinaison les unes avec les autres :
- ladite partie annulaire comprend une structure en forme de treillis,
- ledit corps comprend une partie longitudinale alvéolaire, et
- ladite partie longitudinale comprend une structure en forme de treillis.

La présente invention concerne également un dispositif de suspension, en particulier pour une turbomachine, comportant une bielle telle que décrite ci-dessus, ce dispositif comportant en outre un ensemble comportant une rotule et une cage qui entoure la rotule et est frettée ou fixée dans l'orifice de la tête de bielle qui comporte ladite partie annulaire.

L'invention concerne encore une turbomachine, en particulier d'aéronef, comportant une telle bielle ou un tel dispositif, en particulier pour la suspension d'un AGB à un carter de moteur.

La fonction de continuité électrique permet une mise à la masse, et donc une équipotentialité, entre les têtes de liaison et le corps de la bielle, le carter de moteur et l'AGB.

L'invention concerne enfin un procédé de réalisation d'une bielle, ou d'une partie de bielle, telle que décrite ci-dessus, caractérisé en ce qu'il comprend une étape de fabrication additive de la bielle, et en particulier de sa partie annulaire alvéolaire, par exemple par fusion sélective de lits de poudre.

Les têtes formées d'une seule pièce avec au moins une partie du corps de la bielle par fabrication additive métallique, au moins l'une d'entre elles comportant une partie annulaire alvéolaire, permet d'assurer une continuité électrique au niveau de la partie annulaire alvéolaire entre la bielle, l'AGB et le carter du moteur.

La fonction filtre, ici décrite dans la partie annulaire peut être installée indifféremment dans la bielle ou dans des oreilles d'une chape femelle.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique en coupe d'un modèle particulier de bielle reliée à une chape, selon un art antérieur à la présente invention,
- la figure 2 est une vue schématique en coupe d'un modèle de bielle reliée à une chape, selon un autre art antérieur à la présente invention,
- la figure 3 est une vue très schématique partielle d'un modèle de bielle selon l'invention,
- la figure 4 est une vue schématique en coupe de la bielle de la figure 3 reliée à une chape,
- la figure 5 est une vue schématique en coupe d'un palier lisse pour bielle, et
- la figure 6 est, par exemple, une vue très schématique d'une installation pour la fabrication additive de bielle ou de partie de bielle, ici selon la figure 3.

### DESCRIPTION DETAILLEE

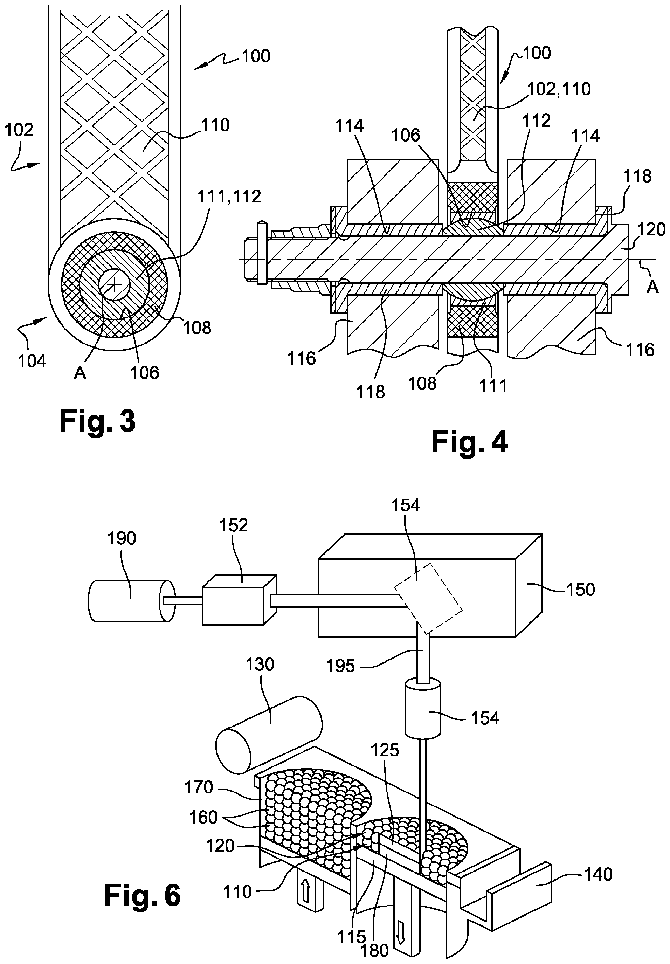

Une bielle 100 selon l'invention, telle qu'illustrée à la figure 3, comprend un corps intermédiaire 102 de forme générale allongée et reliée à ses extrémités longitudinales à des têtes de liaison 104 comportant des orifices 106 dont les axes A sont par exemple sensiblement parallèles. La bielle 100 peut être au moins en partie métallique. Seule une partie de la bielle 100 est visible dans le dessin.

Les têtes 104 peuvent être formées d'une seule pièce avec le corps 102 ou une partie du corps. De préférence, la bielle 100 est réalisée en métal et par fabrication additive, comme cela sera décrit plus en détail en référence à la figure 6.

Les têtes 104 peuvent être assemblées avec le corps 102 ou une partie du corps. La bielle 100 peut être en partie métallique et en partie en matériau composite. Plus précisément, au moins une partie des têtes 104 et au moins une partie du corps 102 sont métalliques. Les têtes 104 et le corps 102 sont conformés de manière à ce que les parties métalliques desdites têtes 104 et dudit corps 102 assurent une continuité électrique le long de la bielle 100, c'est-à-dire entre les deux têtes 104 et le long du corps 102. Ainsi, les têtes 104 et le corps 102 sont conformés de manière à ce que les parties métalliques desdites têtes 104 et dudit corps 102 assurent une continuité électrique entre les éléments auxquels la bielle est reliée.

De préférence, la bielle 100 a une conductivité électrique élevée. La conductivité électrique de la bielle 100 peut être supérieure ou égale à 200 S, soit supérieure ou égale à 200 A.V⁻¹. Préférentiellement la conductivité électrique de la bielle 100 est supérieure ou égale à 400 S, soit inférieure ou égale à 400 A.V⁻¹.

La bielle 100 a de préférence une résistance électrique faible. La résistance électrique de la bielle 100 peut être inférieure ou égale à 5 mΩ, soit inférieure ou égale à 5.10⁻³ V.A⁻¹. Préférentiellement la résistance électrique de la bielle 100 est inférieure ou égale à 2,5 mΩ, soit inférieure ou égale à 2,5.10⁻³ V.A⁻¹.

Au moins l'une des têtes 104 comporte, autour de l'axe de son orifice, une partie annulaire alvéolaire 108 formant un filtre de vibrations et ayant une capacité de déformation en compression et/ou en flexion supérieure à celle du reste de la bielle et en particulier à celle du corps 102.

La partie annulaire alvéolaire 108 est au moins en partie métallique. Avantageusement, la partie annulaire alvéolaire 108 est entièrement métallique.

Cette partie annulaire 108 comprend de préférence une structure en forme de treillis, formé par un ensemble tridimensionnel de motifs (tels que des barres entrecroisées) liés les uns aux autres. Ces motifs sont séparés et espacés les unes des autres par des espaces qui forment les alvéoles de la partie 108.

Avantageusement, le corps 102 de cette bielle comprend une partie longitudinale alvéolaire 110, qui peut avoir le même type de structure à savoir en forme en treillis. Comme évoqué dans ce qui précède, la partie 108 a une capacité de déformation en compression et/ou en flexion supérieure à celle de la partie 110. La structure alvéolaire ou en treillis de la partie 110 permet notamment de l'alléger et/ou de renforcer les zones contraintes.

La bielle 100 peut être associée à un ensemble comportant une rotule 112 et une cage 111 pour former un dispositif de suspension (figures 3 et 4). La cage 111, qui entoure la rotule 112, est frettée ou fixée par un autre procédé dans l'orifice 106 de la tête de bielle 104 qui comporte ladite partie annulaire 108. Comme cela est visible à la figure 4, si le filtre vibratoire formé par la partie 108 est intégré à la bielle 100, il n'est alors plus nécessaire de prévoir des paliers amortisseurs dans les orifices 114 des oreilles 116 de la chape, qui peuvent seulement recevoir de simples douilles cylindriques 118 de guidage. Ces douilles 118 et la rotule 112 sont traversées par une vis 120 similaire à celle de la figure 1.

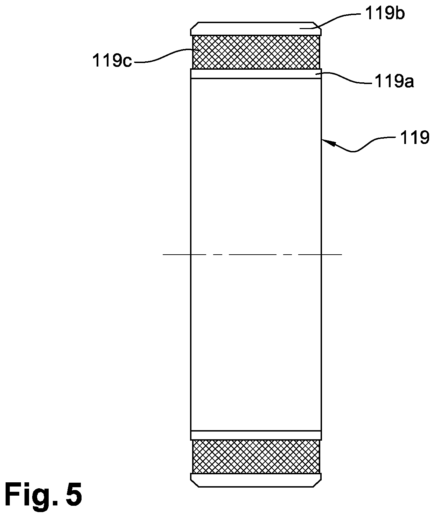

La figure 5 illustre une variante de réalisation de l'invention dans laquelle la partie 108, la cage 111 et la rotule 112 du précédent mode de réalisation sont remplacées par un palier lisse 119 à filtre vibratoire intégré. Le palier 119 comprend deux bagues annulaires, respectivement interne 119a et externe 119b, s'étendant l'une autour de l'autre et reliées ensemble par une structure 119c alvéolaire ou en treillis formant le filtre vibratoire du fait de sa plus grande capacité de déformation en compression et/ou en flexion que les bagues. Le palier est de préférence formé d'une seule pièce. Les bagues 119a et 119 sont ainsi reliées entre elles de manière monobloc par la structure 119c qui peut comprendre des bras organisés en motifs géométriques répétés et ordonnés. L'ensemble est de préférence métallique. Le palier 119 peut également être formé d'une seule pièce avec une bielle, ou bien être rapporté et fixé dans un orifice de bielle.

La bielle 100 est avantageusement réalisée par fabrication additive. La figure 6 montre un exemple d'installation de réalisation d'une bielle par fabrication additive, et en particulier par fusion sélective de lits de poudre via un faisceau de haute énergie.

La machine comprend un bac d'alimentation 170 contenant de la poudre d'un matériau tel qu'un alliage métallique, un rouleau 130 pour transvaser cette poudre depuis ce bac 170 et étaler une première couche 110 de cette poudre sur un support de construction 180.

La machine comprend également un bac de recyclage 140 pour récupérer la poudre usagée (en particulier non fondue ou non frittée) et la poudre en excès (en majeure partie), après étalement de la couche de poudre sur le support de construction 180. Ainsi, la majeure partie de la poudre du bac de recyclage est composée de poudre neuve. Aussi, ce bac de recyclage 140 est communément appelé par la profession bac de trop plein ou cendrier.

Cette machine comprend également un générateur 190 de faisceau énergétique (par exemple laser) 195, et un système de pilotage 150 apte à diriger ce faisceau 195 sur n'importe quelle région du support de construction 180 de façon à balayer n'importe quelle région d'une couche de poudre. La mise en forme du faisceau énergétique (laser) et la variation de son diamètre sur le plan focal se font respectivement au moyen d'un dilatateur de faisceau 152 et d'un système de focalisation 154, l'ensemble constituant le système optique.

Cette machine pour appliquer le procédé assimilable à un procédé de dépôt direct de métal ou DMD (acronyme de l'anglais *Direct Metal Deposition)* sur une poudre peut utiliser n'importe quel faisceau de haute énergie en place du faisceau laser 195, tant que ce faisceau est suffisamment énergétique pour dans le premier cas fondre ou dans l'autre cas former des cols ou ponts entre les particules de poudre et une partie du matériau sur lequel les particules reposent.

Le rouleau 130 peut être remplacé par un autre système de dépose approprié, tel qu'un dévidoir (ou trémie) associé à une lame de raclage, à un couteau ou à une brosse, apte à transvaser et étaler la poudre en couche.

Le système de pilotage 150 comprend par exemple au moins un miroir 155 orientable sur lequel le faisceau laser 195 se réfléchit avant d'atteindre une couche de poudre dont chaque point de la surface se trouve située toujours à la même hauteur par rapport à la lentille de focalisation, contenue dans le système de focalisation 154, la position angulaire de ce miroir 155 étant pilotée par une tête galvanométrique pour que le faisceau laser balaye au moins une région de la première couche de poudre, et suive ainsi un profil de pièce pré-établi.

Cette machine fonctionne de la façon suivante. On dépose à l'aide du rouleau 130 une première couche 110 de poudre d'un matériau sur le support de construction 180, cette poudre étant transvasée depuis un bac d'alimentation 170 lors d'un mouvement aller du rouleau 130 puis elle est raclée, et éventuellement légèrement compactée, lors d'un (ou de plusieurs) mouvement(s) de retour du rouleau 130. L'excédent de poudre est récupéré dans le bac de recyclage 140. On porte une région de cette première couche 110 de poudre, par balayage avec le faisceau laser 195, à une température supérieure à la température de fusion de cette poudre (température de liquidus). La tête galvanométrique est commandée selon les informations contenues dans la base de données de l'outil informatique utilisé pour la conception et la fabrication assistées par ordinateur de la pièce à fabriquer. Ainsi, les particules de poudre 160 de cette région de la première couche 110 sont fondues et forment un premier cordon 115 d'un seul tenant, solidaire avec le support de construction 180. A ce stade, on peut également balayer avec le faisceau laser plusieurs régions indépendantes de cette première couche pour former, après fusion et solidification de la matière, plusieurs premiers cordons 115 disjoints les uns des autres. On abaisse le support 180 d'une hauteur correspondant à l'épaisseur déjà définie de la première couche (entre 20 et 100 µm et en général de 30 à 50 µm). L'épaisseur de la couche de poudre à fusionner ou à consolider reste une valeur variable d'une couche à l'autre car elle est fort dépendante de la porosité du lit de poudre et de sa planéité alors que le déplacement pré-programmé du support 180 est une valeur invariable au jeu près. On dépose ensuite une deuxième couche 120 de poudre sur la première couche 110 et sur ce premier cordon 115, puis on chauffe par exposition au faisceau laser 195 une région de la deuxième couche 120 qui est située partiellement ou complètement au-dessus de ce premier cordon 115, de telle sorte que les particules de poudre de cette région de la deuxième couche 120 sont fondues, avec au moins une partie du premier cordon 115, et forment un deuxième cordon d'un seul tenant ou consolidé 125, l'ensemble de ces deux cordons 115 et 125 formant un bloc d'un seul tenant. A cet effet, le deuxième cordon 125 est avantageusement déjà entièrement lié dès qu'une partie de ce deuxième cordon 125 se lie au premier élément 115. On comprend que selon le profil de la pièce à construire, et notamment dans le cas de surface en contre-dépouille, il se peut que la région précitée de la première couche 110 ne se trouve pas, même partiellement, en dessous de la région précitée de la deuxième couche 120, de sorte que dans ce cas le premier codon 115 et le deuxième cordon 125 ne forment alors pas un bloc d'un seul tenant. On poursuit ensuite ce processus de construction de la pièce couche par couche en ajoutant des couches supplémentaires de poudre sur l'ensemble déjà formé. Le balayage avec le faisceau 195 permet de construire chaque couche en lui donnant une forme en accord avec la géométrie de la pièce à réaliser, par exemple les structures en treillis précitées. Les couches inférieures de la pièce se refroidissent plus ou moins vite au fur et à mesure que les couches supérieures de la pièce se construisent.

Afin de diminuer la contamination de la pièce, par exemple en oxygène dissous, en oxyde(s) ou en un autre polluant lors de sa fabrication couche par couche telle que décrite ci-dessus, cette fabrication doit être effectuée dans une enceinte à degré d'hygrométrie contrôlée et adaptée au couple procédé/matériau, remplie d'un gaz neutre (non réactif) vis-à-vis du matériau considéré tel que l'azote (N2), l'argon (Ar) ou l'hélium (He) avec ou non addition d'une faible quantité d'hydrogène (H2) connu pour son pouvoir réducteur. Un mélange d'au moins deux de ces gaz peut être aussi considéré. Pour empêcher la contamination, notamment par l'oxygène du milieu environnant, il est d'usage de mettre cette enceinte en surpression.

Ainsi, la fusion sélective ou le frittage sélectif par laser permet de construire avec une bonne précision dimensionnelle des pièces faiblement polluées dont la géométrie en trois dimensions peut être complexe.

La fusion sélective ou le frittage sélectif par laser utilise en outre de préférence des poudres de morphologie sphérique, propres (c'est-à-dire non contaminées par des éléments résiduels provenant de la synthèse), très fines (la dimension de chaque particule est comprise entre 1 et 100 µm et de préférence entre 45 et 90 µm), ce qui permet d'obtenir un excellent état de surface de la pièce finie.

La fusion sélective ou le frittage sélectif par laser permet par ailleurs une diminution des délais de fabrication, des coûts et des frais fixes, par rapport à une pièce moulée, injectée ou usinée dans la masse.

## Revendications

1. Bielle (100), en particulier pour une turbomachine, comprenant un corps intermédiaire (102) de forme générale allongée et reliée à ses extrémités longitudinales à des têtes de liaison (104) comportant des orifices (106) dont les axes (A) sont par exemple sensiblement parallèles, lesdites têtes étant assemblées ou formées d'une seule pièce avec au moins une partie dudit corps et au moins l'une d'entre elles comportant, autour de l'axe de son orifice, une partie annulaire alvéolaire (108) formant un filtre vibratoire et ayant une capacité de déformation en compression et/ou en flexion supérieure à celle du reste de la bielle et en particulier à celle dudit corps, **caractérisée en ce que** ladite partie annulaire comprend une structure en forme de treillis.

2. Bielle (100) selon la revendication 1, dans laquelle elle est au moins en partie métallique.

3. Bielle (100) selon la revendication 2, dans laquelle ledit corps (102) et lesdites têtes (104), et de préférence la partie annulaire alvéolaire (108) de l'une des têtes, sont en partie métalliques.

4. Bielle (100) selon la revendication 2 ou 3, dans laquelle la résistance électrique de la bielle est inférieure ou égale à 5 mΩ, de préférence inférieure ou égale à 2,5 mΩ.

5. Bielle (100) selon l'une des revendications 2 à 4, dans laquelle la conductance électrique de la bielle est supérieure ou égale à 200 S, de préférence supérieur ou égale à 400 S.

6. Bielle (100) selon l'une des revendications précédentes, dans laquelle ledit corps (102) comprend une partie longitudinale alvéolaire (110).

7. Bielle (100) selon la revendication précédente, dans laquelle ladite partie longitudinale (110) comprend une structure en forme de treillis.

8. Dispositif de suspension, en particulier pour une turbomachine, comportant une bielle (100) selon l'une des revendications précédentes, ce dispositif comportant en outre un ensemble comportant une rotule (112) et une cage (111) qui entoure la rotule et est frettée ou fixée dans l'orifice (106) de la tête de bielle (104) qui comporte ladite partie annulaire (108).

9. Procédé de réalisation d'une bielle, ou d'une partie de bielle, selon l'une des revendications 1 à 7, **caractérisé en ce qu'**il comprend une étape de fabrication additive de la bielle (100), et en particulier de sa partie annulaire alvéolaire (108), par exemple par fusion sélective de lits de poudre.

## Patentansprüche

1. Pleuel (100), insbesondere für eine Turbomaschine, das einen Zwischenkörper (102) mit allgemein länglicher Form und an seinen Längsenden mit Verbindungsköpfen (104) verbunden umfasst, der Öffnungen (106) umfasst, deren Achsen (A) zum Beispiel im Wesentlichen parallel sind, wobei die Köpfe mit mindestens einem Teil des Körpers aus einem Stück zusammengefügt oder gebildet sind, und wobei mindestens einer von ihnen um die Achse seiner Öffnung ein alveolares ringförmiges Teil (108) umfasst, das ein Schwingungsfilter bildet und eine Verformungskapazität in Kompression und/oder Biegung größer als die des Rests des Pleuels, und insbesondere als die des Körpers aufweist, **dadurch gekennzeichnet, dass** das ringförmige Teil eine Struktur in Gitterform umfasst.

2. Pleuel (100) nach Anspruch 1, wobei es mindestens zum Teil metallisch ist.

3. Pleuel (100) nach Anspruch 2, wobei der Körper (102) und die Köpfe (104) und vorzugsweise das alveolare ringförmige Teil (108) eines der Köpfe zum Teil metallisch sind.

4. Pleuel (100) nach Anspruch 2 oder 3, wobei der elektrische Widerstand des Pleuels kleiner oder gleich 5 mΩ, vorzugsweise kleiner oder gleich 2, 5 mΩ ist.

5. Pleuel (100) nach einem der Ansprüche 2 bis 4, wobei die elektrische Leitfähigkeit des Pleuels größer oder gleich 200 S, vorzugsweise größer oder gleich 400 ist.

6. Pleuel (100) nach einem der vorstehenden Ansprüche, wobei der Körper (102) ein alveolares Längsteil (110) umfasst.

7. Pleuel (100) nach dem vorstehenden Anspruch, wobei das Längsteil (110) eine Struktur in Gitterform umfasst.

8. Aufhängungsvorrichtung insbesondere für eine Turbomaschine, die ein Pleuel (100) nach einem der vorstehenden Ansprüche umfasst, wobei diese Vorrichtung weiter eine Einheit umfasst, die ein Kugelgelenk (112) und einen Käfig (111) umfasst, der das Kugelgelenk umgibt und in der Öffnung (106) des Pleuelkopfes (104), der das ringförmige Teil (108) umfasst, aufgeschrumpft oder befestigt ist.

9. Verfahren zum Herstellen eines Pleuels oder eines Pleuelteils nach einem der Ansprüche 1 bis 7, **dadurch gekennzeichnet, dass** es einen zusätzlichen Fertigungsschritt des Pleuels (100) umfasst, und insbesondere seines alveolaren ringförmigen Teils (108), zum Beispiel durch selektives Schmelzen von Pulverbetten.

## Claims

1. A connecting rod (100), in particular for a turbomachine, comprising an intermediate body (102) of generally elongated shape and connected at its longitudinal ends to connecting heads (104) comprising orifices (106) whose axes (A) are for example substantially parallel, said heads being assembled or integrally formed with at least one part of said body and at least one of them comprising, about the axis of its orifice, an alveolar annular part (108) forming a vibratory filter and having a flexural and/or compressive deformation capacity greater than that of the rest of the connecting rod and in particular that of said body, **characterized in that** said annular part comprises a lattice-shaped structure.

2. The connecting rod (100) according to claim 1, wherein the connecting rod is at least partly metallic.

3. The connecting rod (100) according to claim 2, wherein said body (102) and said heads (104), and preferably the alveolar annular part (108) of one of the heads, are partly metallic.

4. The Connecting rod (100) according to claim 2 or 3, wherein the electrical resistance of the connecting rod is less than or equal to 5 mΩ, preferably less than or equal to 2.5 mΩ.

5. The Connecting rod (100) according to one of claims 2 to 4, wherein the electrical conductance of the connecting rod is greater than or equal to 200 S, preferably greater than or equal to 400 S.

6. The connecting rod (100) according to one of the preceding claims, wherein said body (102) comprises an alveolar longitudinal part (110).

7. The connecting rod (100) according to the preceding claim, wherein said longitudinal part (110) comprises a lattice-shaped structure.

8. A suspension device, in particular for a turbomachine, comprising a connecting rod (100) according to one of the preceding claims, this device further comprising an assembly comprising a ball joint (112) and a cage (111) which surrounds the ball joint and is shrunk or fixed in the orifice (106) of the connecting rod head (104) which comprises said annular part (108).

9. A method for producing a connecting rod, or a connecting rod part, according to one of claims 1 to 7, **characterized in that** it comprises a step of additive manufacturing of the connecting rod (100), and in particular of its alveolar annular part (108), for example by selective melting of powder beds.
